# EUROPEAN PATENT APPLICATION

(11) **EP 4 778 769 A1**
(43) Date of publication of application: **22.07.2026**
(21) Application number: 25153128.1
(22) Date of filing: 21.01.2025
(51) Int. Cl.: B60L 3/00, B60L 3/04, B60L 53/14, B60L 53/16, B60L 53/18, B60L 53/31, B60L 53/30

(54) **ELECTRIC VEHICLE SUPPLY EQUIPMENT CONFIGURED FOR PROVIDING POWER FOR CHARGING A FLOATING VESSEL, METHOD OF PROVIDING POWER FOR CHARGING A FLOATING VESSEL, AND USE OF THE ELECTRIC VEHICLE SUPPLY EQUIPMENT**

(71) Applicant: ABB E-mobility B.V., 2629 JG Delft (NL)
(72) Inventor: RAAIJMAKERS, Stefan, 2613 WN Delft (NL); RODRIGUEZ - ESCUDE, Miguel, 3111 PB Schiedam (NL)
(74) Representative: Zimmermann & Partner Patentanwälte mbB

(57) **Abstract**

Electric vehicle supply equipment, EVSE, configured for providing power for charging a floating vessel with a converter having an input side configured to be connected to a power supply infrastructure, and an output side configured for providing a direct current, DC, charging power, the output side comprising a +DC output line and a -DC output line, and a voltage limiting device with a first terminal and a second terminal, the first terminal being configured to be grounded to a shoreside protective earth, PE, connection of the power supply infrastructure. +DC and -DC EVSE terminals are configured to be connected to corresponding shipside +DC and -DC terminals of the floating vessel. The EVSE earth terminal is configured to be connected to a shipside protective earth, SPE, terminal of the floating vessel. The EVSE earth terminal is connected to the second terminal of the voltage limiting device.

## Description

Aspects of the invention relate to providing power to a floating vessel, particularly the charging of floating vessels, such as floating vessels being electric vehicles. Aspects of the invention particularly relate to providing a DC charging power to a floating vessel. Aspects of the invention particularly relate to corrosion protection of the floating vessel while electrically connected to a shoreside charging infrastructure, such as electric vehicle supply equipment.

### Technical background:

Floating vessels, such as ships, boats, floating platforms, ferries, tankers or other types of vessels often include conductive metal components, such as e.g. a metal hull or other structural metallic components, metal driveshafts, propellers, rudders or the like. These metal components are often in contact with water. The water may act as an electrolyte which can facilitate the oxidation of the metal and the subsequent dissolution of metal ions, which may contribute to corrosion.

Corrosion of metal components is generally undesirable. Accordingly, several techniques are known in the art to reduce or prevent corrosion. For example, metal components may be coated with paints or inhibitors or connected to impressed current cathodic protection systems. Furthermore, undesirable galvanic corrosion may be prevented, at least in part, by providing sacrificial anodes, such as zinc anodes. Maintaining and/or operating such preventative anticorrosion measures can be costly and time-consuming. It is therefore desirable to prevent corrosion even if effective corrosion protection is provided.

Corrosion may be driven by electrochemical effects, e.g. in case a galvanic cell is formed between the floating vessel and a shoreside component. Under such conditions, portions of the floating vessel may act as an anode and the shoreside surface may act as a cathode, thereby promoting corrosion of the floating vessel. When connecting a floating vessel to an external power source while docked e.g. in a port or marina, it is therefore known in the art to provide isolation transformers so that a shoreside electrical system is galvanically isolated from a shipside electrical system.

Recent improvements in electrical energy storage systems have resulted in floating vehicles which are powered and/or propelled, at least in part, by an independent on-board electrical system. For example, the floating vessel may be a battery-electric vehicle, hybrid electric vehicle or the like.

Charging an energy storage system, such as a battery, of the floating vessel may be challenging. In particular, the safe and efficient use of high-powered DC charging may be desirable, but may be incompatible with existing solutions to prevent galvanic corrosion of the floating vessel, such as shipside isolation transformers.

In light of the above, it is desirable to provide an improved electric vehicle supply equipment and method of providing power for charging a floating vessel. The solutions proposed herein solve the above-stated problem at least in part.

### Summary of the invention

The invention is set out in the appended set of claims.

According to an aspect, an electric vehicle supply equipment (EVSE) configured for providing power for charging a floating vessel is described. The EVSE includes a converter having an input side configured to be connected to a power supply infrastructure, and an output side configured for providing a direct current (DC) charging power, the output side having a +DC output line and a -DC output line, a voltage limiting device having a first terminal and a second terminal, the first terminal being configured to be grounded to a shoreside protective earth (PE) connection of the power supply infrastructure, and a vehicle connector having a +DC EVSE terminal connected to the +DC output line, a -DC EVSE terminal connected to the -DC output line, and a EVSE earth terminal. The +DC and -DC EVSE terminals are configured to be connected to corresponding shipside +DC and -DC terminals of the floating vessel. The EVSE earth terminal is configured to be connected to a shipside protective earth (SPE) terminal of the floating vessel. The EVSE earth terminal is connected to the second terminal of the voltage limiting device.

According to an aspect, a method of providing power for charging a floating vessel is described. The method includes providing an electric vehicle supply equipment (EVSE), connecting a +DC EVSE terminal and a -DC EVSE terminal of the EVSE to corresponding shipside +DC and -DC terminals of the floating vessel, connecting a shipside protective earth (SPE) terminal of the floating vessel to a corresponding EVSE earth terminal of the EVSE, and connecting, by the EVSE, the SPE terminal to a shoreside protective earth (PE) via the EVSE earth terminal and a voltage limiting device.

According to an aspect, the use of an EVSE according to embodiments described herein is described. The use includes providing power for charging a floating vessel. The use may include performing, by the EVSE, the operations described herein with respect to a method of providing power for charging a floating vessel according to embodiments described herein.

According to an aspect, a floating vessel is described. The floating vessel may be a vehicle or installation suitable for being stationed, at least partially submerged in and/or travelling across a body of water or other type of wetland. The floating vessel may be a boat, ship, hovercraft, raft, submersible or submarine. The floating vessel may be configured for transporting persons or goods, such as a tanker, container ship, ferry, cruise ship, or the like. The floating vessel may be a recreational vehicle, such as a boat, yacht, jet-ski or the like. The floating vessel may be an industrial vessel, such as a floating platform, a floating production system, a crane vessel, a digger vessel or the like. While the foregoing has been directed to some examples, these examples are not to be understood as limiting.

According to an aspect, the floating vessel may include an onboard energy storage system. The energy storage system may be configured for receiving electric energy, storing the electric energy, and releasing electric energy upon demand. The energy storage system may include one or more batteries, such as lithium-based or redox-flow based batteries, however, other types of energy storage systems known in the art, such as flywheels, compressed air storage, and/or fuel cells may be suitable.

According to an aspect, the floating vessel may be powered and/or propelled by energy released from the energy storage system. For example, the floating vessel may include an electric motor configured for receiving electric energy from the energy storage system, and driving a propeller or other type of propulsion system of the floating vessel. Accordingly, the floating vessel may be an electric vehicle, such as a battery-electric vehicle or a hybrid vehicle. Additionally, or alternatively, the energy storage system may be configured for powering on-board systems of the floating vessel, e.g. in place of an engine and/or generator. For example, and not limited thereto, the energy storage system may be configured as an on-board power supply configured for providing power for heating, cooling, lighting, ventilation, or other types of electrical equipment and/or consumer.

In the context of this disclosure, several units for describing and/or measuring properties of electrical circuits and/or systems are used. Unless stated otherwise, these units shall be understood as having the meaning commonly known in the art. The units referred to include electric potential expressed in volt (V), electric current expressed in ampere (A), electric power expressed in watt (W), and electric resistance expressed in Ohm (Ω). Measurement of such values may be performed by a person skilled in the art with a corresponding meter, such as a voltmeter, amperemeter, wattmeter, or ohmmeter, or even determined from e.g. a circuit diagram according to means known in the art, such as circuit simulation and/or the application of laws known in the art, such as Kirchhoff's law(s), Ohm's law and/or Maxwell's equations.

According to an aspect, an electric vehicle supply equipment (EVSE) is described. The EVSE is configured for providing power for charging the floating vessel, e.g. for charging an energy storage system of the floating vessel. The EVSE may be configured for providing a direct current (DC) charging power. In particular, the EVSE may be configured for providing a DC charging power having a voltage of at least 150 V, at least 500 V, at least 1000 V, or even about 1250 V. For example, the EVSE may be configured for providing a charging power having a voltage between 150 V and 1250 V. The EVSE may be configured for providing a charging power having a current of at least 100 A, at least 200 A, at least 500 A, at least 1000 A, at least 2000 A, or even a current of about 3000 A. Accordingly, the EVSE may be configured for providing a charging power of at least 15 kW, at least 50 kW, at least 350 kW, at least 500 kW, at least 1 MW, at least 2 MW, or even about 3.75 MW.

According to an aspect, the EVSE may be configured according to and/or comply with a standard, particularly a safety standard, such as ISO 5474, IEC 60664 and/or IEC 61851. According to an aspect, the EVSE may be configured for megawatt charging, e.g. according to the CharIN Whitepaper Megawatt Charging System (MCS), Recommendations and requirements for MCS related standards bodies and solution suppliers, Version 1.0, 2022-11-24.

According to an aspect, the EVSE may be grounded and/or earthed. For example, the EVSE may be connected to a shoreside protective earth (PE) according to methods known in the art, e.g. by connecting the EVSE to a grounding rod, and/or connecting the EVSE to a PE provided e.g. by power supply infrastructure, such as a dedicated PE connection and/or a (grounded) neutral conductor.

According to an aspect, the floating vessel may include a shipside protective earth (SPE), although the term "shipside" should not be understood as limiting the floating vessel to any particular type of floating vessel. The SPE may be defined as a ground potential which is electrically connected to conductive elements of the floating vessel, such as a e.g. a metal portion, such as a hull of the floating vessel, a ground busbar, or other grounding and/or earthing systems known in the art. The metal portion being connected to the SPE of the floating vessel may include a water-contacting metal portion of the floating vessel.

According to an aspect, the EVSE includes a voltage limiting device (VLD) provided in-between the shoreside protective earth PE and the shipside protective earth SPE. The VLD is configured for limiting a current flowing between PE and SPE, provided that a potential between PE and SPE is below a threshold potential. Accordingly, while the potential is low, PE and SPE may be considered isolated and/or quasi-isolated by the VLD, which may act similar to an air-gap and/or a high resistance. In case the potential between PE and SPE is high, such as at or above the threshold potential, a conductivity of the VLD increases, particularly so that a current may flow between PE and SPE until the potential between PE and SPE falls at least below the threshold potential.

Aspects of the disclosure, particularly the EVSE, the VLD, and methods of charging a floating vessel will be explained in further detail with reference to embodiments.

The present disclosure beneficially allows the use of a protective earth on both the shipside and the shoreside for (high power) DC charging, which may be beneficial or even required for safety and/or monitoring of a charging operation. The VLD beneficially limits a current which may contribute to galvanic corrosion of the floating vessel, while providing efficient grounding of the floating vessel in case a potential between the shipside protective earth SPE and the shoreside protective earth PE increases beyond a predefined threshold, e.g. in case of fault conditions, lightning strike, or the like. Thus, corrosion of the floating vessel can be limited, while maintaining the safety and other advantages of an earthing system.

Further advantages, features, aspects and details that can be combined with embodiments described herein are evident from the dependent claims, the description and the drawings.

### Brief description of the Figures:

The details will be described in the following with reference to the figures, wherein
- Fig. 1: is a schematic view of an electric vehicle supply equipment according to embodiments while connected to a floating vessel;
- Fig. 2: is a schematic circuit diagram of an electric vehicle supply equipment according to embodiments while connected to a floating vessel;

- Fig. 3: is a schematic circuit diagram of a voltage limiting device according to embodiments;
- Fig. 4: is a schematic flowchart of a method of providing power for charging a floating vessel according to embodiments.

### Detailed description of the Figures and of embodiments:

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment applies to a corresponding part or aspect in another embodiment as well.

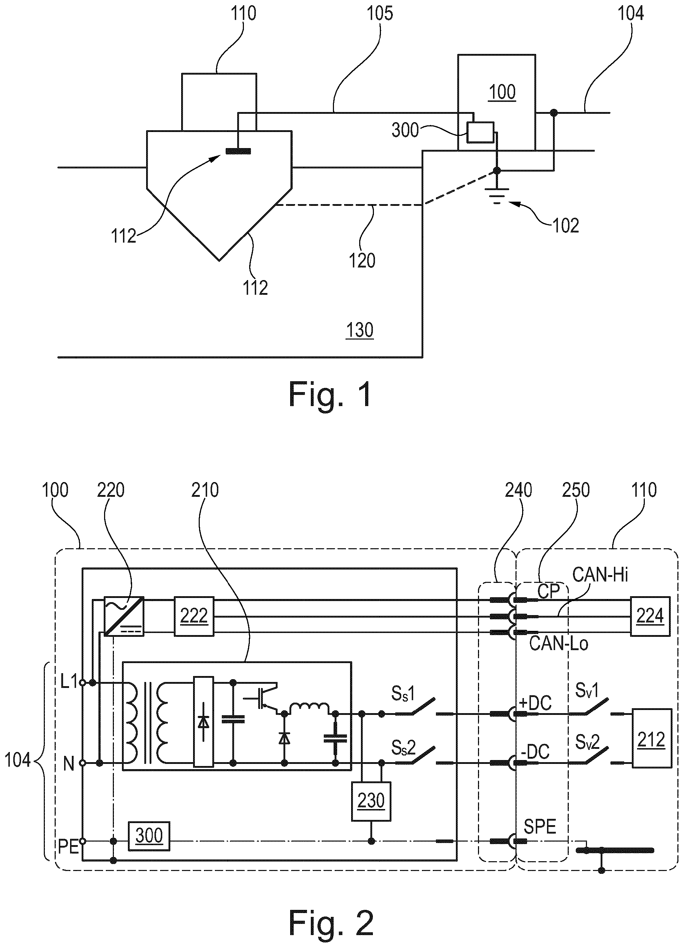

Referring now to Fig. 1, an electric vehicle supply equipment (EVSE) 100 is depicted while connected to a floating vessel 110. In the exemplary scenario shown in Fig. 1, the EVSE 100 is provided shoreside, e.g. in a port, harbour, marina, dock or other type of structure provided adjacent a body of water 130. It should be noted that the EVSE 100 is not necessarily land-bound, i.e. in some embodiments, the EVSE 100 may be provided on a second floating vessel and configured for providing a charging power to the (first) floating vessel 110.

As shown in Fig. 1, the EVSE 100 is electrically connected to a power supply infrastructure 104. The power supply infrastructure 104 may include a connection to a power grid, a generator or the like. While the connection to the power supply infrastructure 104 is shown as a single line for simplicity, the skilled person understands that the connection may include various lines and/or connection types, such as e.g. a single phase alternating current (AC) connection, a two-phase AC connection, a three-phase AC connection, a DC connection, or other known connection types or combinations thereof. The power supply infrastructure 104 is configured for powering a converter of the EVSE. In particular, the converter may include an input side connected to the power supply infrastructure 104 and configured for providing, at an output side of the converter, a DC charging power.

As shown in Fig. 1, the EVSE 100 is configured to be connected to a floating vessel 110. For example, the EVSE 100 may be and/or include a charging column with a vehicle connector provided e.g. at the end of a charging cable. A floating vessel 110 in need of charging may approach the EVSE 100 so that the vehicle connector can be inserted into a corresponding receptacle of the floating vessel 110 to form the electrical connection 105.

The electrical connection 105 is drawn in Fig. 1 as a single line for simplicity. In the context of Fig. 1, for simplicity, the electrical connection 105 essentially shows a connection between the EVSE and a shipside ground potential 112. Further aspects of the electrical connection are explained herein with reference to Fig. 2. The electrical connection 105 may (further) connect the floating vessel to +DC and -DC outputs of the converter so that a power for charging the floating vessel may be transferred from the +DC, -DC outputs to the floating vessel. For example, the electrical connection 105 may be obtained by combining multiple lines and/or terminals in a vehicle connector to be inserted essentially at the same time into a receptacle of the floating vessel. In particular, the EVSE 100 may be connected to the floating vessel by connecting a +DC and a -DC output of the EVSE 100, e.g. by connecting +DC EVSE and -DC EVSE terminals of a vehicle connector of the EVSE to corresponding terminals of the floating vessel 110.

The electrical connection 105 includes a shipside protective earth connection (SPE) which connects the EVSE 100 to a shipside ground potential 112. The shipside ground potential 112 may be defined by a grounding system of the floating vessel. For example, the shipside ground potential 112 may be defined by and/or connected to a (sea)water ground. For example, a metal hull, metal rigging or other conductive components of the floating vessel may be electrically connected to the shipside ground and/or be kept at the shipside ground potential.

According to some embodiments, the shipside ground potential may be biased, e.g. according to methods known in the art. For example, the floating vessel may include an active corrosion protection system, such as an impressed current cathodic protection system. Beneficially, the systems and methods described herein, such as the EVSE 100, may be used in combination with such further corrosion protection systems.

As shown in Fig. 1, the EVSE 100 is further connected to a shoreside ground potential 102 defined by a connection to a shoreside protective earth (PE). As shown in Fig. 1, the PE connection may be connected to a PE connection and/or a neutral connection of the power supply infrastructure 104.

As indicated in Fig. 1, in case an electrical connection is formed within the EVSE between the shipside ground potential 112 and the shoreside ground potential 102, e.g. in case the PE is connected to the SPE, a circuit resembling a galvanic cell is formed in which the water 130 can act as an electrolyte and corrodible materials of the floating vessel may act as an anode. Accordingly, in the simplified galvanic cell model, a current 120 flowing through the electrolyte would essentially correspond to a current flowing through the electrical connection 105 through the SPE connection. To limit corrosion, limiting a current flowing through the SPE connection and towards the PE, or vice versa, is desirable, since this would likewise inhibit the current 120 flowing through the electrolyte.

Accordingly, to limit a current flowing between PE and SPE, the EVSE 100 includes a voltage limiting device (VLD) 300. The VLD 300 has a first terminal connected to the PE, and a second terminal connected to the SPE. Under nominal conditions, i.e. when the potential between PE and SPE is below a threshold voltage, the VLD 300 limits the current between, or even isolates, PE from SPE. In case the potential between PE and SPE increases to or above the threshold voltage, the VLD 300 becomes conductive and limits the potential between PE and SPE.

Beneficially, the VLD allows PE and SPE to provide the same or similar safety functionality as a common and/or shared protective earth. For example, in case of an electrical fault or lightning strike, the SPE may be energized. In case the SPE is not grounded to the shoreside protective earth, the energized floating vessel 110, e.g. a hull of the floating vessel 110, may pose a safety risk to people and/or equipment coming into contact or vicinity with the floating vessel 110. Beneficially, through action of the VLD 300, a potential of the SPE does not rise by more than the threshold voltage above the potential of the PE since, when the potential is above the threshold voltage, the SPE is grounded to the PE via the VLD 300.

Beneficially, the EVSE 100 provides similar safety and functionality as an EVSE having a common shipside and shoreside protective earth, while not allowing currents to flow at the voltage levels expected from (potential) galvanic corrosion, which are typically below a threshold voltage of the VLD 300. Accordingly, the EVSE 100 provided herein limits corrosion, while simultaneously providing high safety.

Referring now to Fig. 2, further aspects of the EVSE 100 are explained with reference to embodiments. Fig. 2 shows a schematic circuit diagram showing the EVSE 100 in a configuration as shown and/or similar to the configuration shown in Fig. 1.

The EVSE 100 includes a converter 210. An input side of the converter 210 can be connected to a power supply infrastructure 104. In the embodiment shown in Fig. 2, the converter 210 includes an input side with a transformer to be connected to a single phase L1, N of the power supply infrastructure.

The converter 210 further includes an output side configured for providing a DC charging power. The DC charging power may be used to charge an onboard energy storage system 212, such as a battery, of the floating vessel 110. As shown in Fig. 2, the DC charging power is provided at a +DC output line and a -DC output line. The EVSE further includes a vehicle connector 240 having a +DC EVSE terminal connected to the +DC output line, and a -DC EVSE terminal connected to the -DC output line. The +DC and -DC EVSE terminals are configured to be connected to corresponding shipside +DC and -DC terminals of a receptacle 250 of the floating vessel 110. In the embodiment shown in Fig. 2, the +DC line and the -DC line include switches S_{S}1, S_{S}2, which can selectively close and open a connection between the converter output side and the +DC/-DC EVSE terminals. Further switches, such as the switches S_{V}1, S_{V}2 may be provided for the floating vessel 110.

In the present example, the converter 210 includes a transformer, a rectifier, and a switched-mode power supply. The converter 210 is not limited to the example shown in Fig. 2, and further converter types may be equally suitable. For example, in some embodiments, the converter 210 may be a DC/DC converter, e.g. in case the power supply infrastructure 104 provides DC power to the input side. For example, in some embodiments, the converter may include a switched mode power supply, such as a switched-mode power supply including a medium-frequency transformer. For example, the medium-frequency transformer may be driven by the switched-mode power supply, and/or provide galvanic isolation between the input side and the output side of the converter.

The EVSE 100 includes a VLD 300. The VLD 300 has a first terminal and a second terminal. The first terminal is connected and/or grounded to a shoreside protective earth PE connection of the power supply infrastructure 104. For example, the power supply infrastructure 104 may include a dedicated PE conductor. For example, the power supply infrastructure 104 and/or the EVSE 100 may include an earthed connection, such as a ground rod. Various solutions for earthing electrical components and/or components of a power supply infrastructure are known in the art, and may be equally suitable. As shown in Fig. 2, according to embodiments, a housing of the EVSE 100 may be connected to PE.

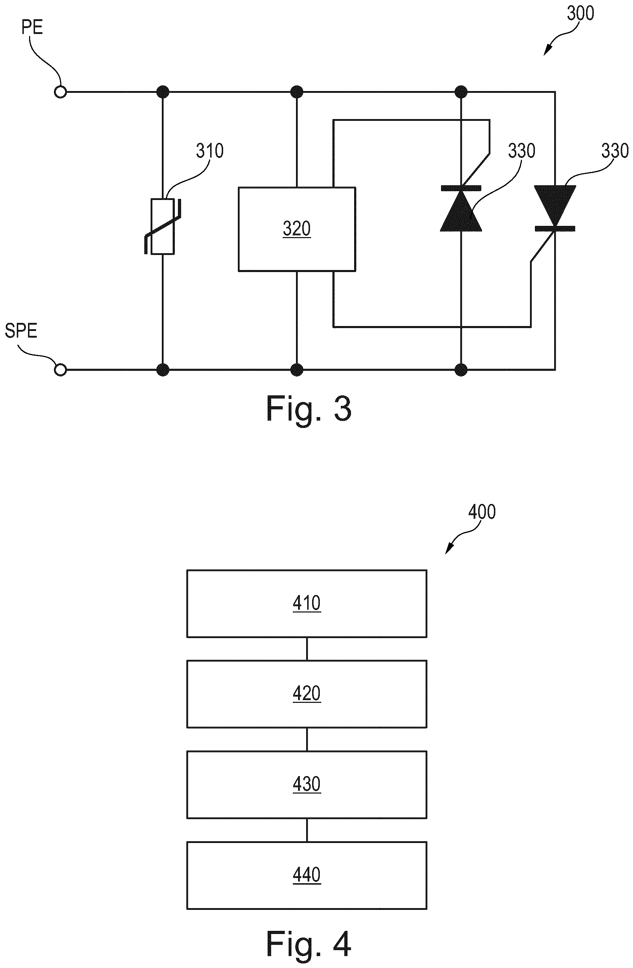

The second terminal of the VLD 300 is connected to an EVSE earth terminal included in the vehicle connector 240. The EVSE earth terminal is configured to be connected to a shipside protective earth SPE terminal of a receptacle 250 of the floating vessel 110, e.g. as shown in Fig. 2. When connected to the floating vessel 110, the second terminal of the VLD 300 is at the SPE potential, while the first terminal of the VLD 300 is at the PE potential. A VLD 300 according to embodiments will be described in further detail with reference to Fig. 3.

According to embodiments, as shown in Fig. 2, the EVSE 100 may include an insulation monitoring device 230. The insulation monitoring device 230 may be connected to one or both of the +DC/-DC output lines, and the SPE. In case of an electrical fault, e.g. within the EVSE 100 or the floating vessel 110, the SPE may deviate from a quasi-neutral potential and be energized e.g. to a voltage at or in-between +DC and -DC. Accordingly, the insulation monitoring device 230 may detect a fault by detecting a fault voltage of SPE with respect to +DC and/or -DC. Likewise, the insulation monitoring device 230 may be configured for detecting a fault current between +DC/-DC and SPE, and/or measuring a resistance indicative of a fault between SPE and +DC/-DC. In case of a fault, the insulation monitoring device may be configured for performing protective functions, such as disabling the converter 210 and/or opening the switches S_{S}1/S_{S}2, or even causing the floating vessel to open the switches S_{V}1/S_{V}2.

According to embodiments, e.g. as shown in Fig. 2, the converter 210 may provide galvanic isolation between the input side and the output side of the converter 210. In particular, as shown in Fig. 2, the converter 210 may include a transformer configured for providing galvanic isolation between the input side and the output side of the converter 210.

According to embodiments, e.g. as shown in Fig. 2, the converter 210, particularly an output side of the converter 210, may be galvanically isolated from the shoreside PE connection. In some embodiments, an input side of the converter may be isolated from both PE and SPE. In some embodiments, an output side of the converter may be isolated from both PE and SPE. In some embodiments, an input side of the converter may be connected to PE and/or an output side of the converter may be connected to SPE.

According to some embodiments, the converter 210, particularly an output side of the converter 210, may be insulated, particularly double insulated. Accordingly, electrical safety may be provided despite no protective earth being provided for the converter 210.

According to some embodiments, the SPE may be considered and/or treated as a live conductor. Accordingly, the VLD 300 and the line in-between the second terminal of the VLD 300 and the EVSE SPE terminal may be considered a live conductor and/or the EVSE 100 may be constructed so that the line in-between the second terminal of the VLD 300 and the EVSE SPE terminal is configured for being safely utilized as a live conductor. Accordingly, the SPE may be insulated, particularly double insulated and/or disconnected from other components of the EVSE 100, such as a housing of the EVSE 100.

According to some embodiments, the vehicle connector may further include control lines for signalling and/or communication, such as analogue and/or digital signal lines. In the embodiment shown in Fig. 2, the vehicle connector 240 includes signal terminals CP, CAN-Hi, CAN-Lo to connect a supply equipment communication controller (SECC) 222 of the EVSE 100 to an electric vehicle communication controller (EVCC) 224 of the floating vessel 110. The signal terminals may allow the SECC 222 and the EVCC 224 to communicate and/or exchange data and/or signals, e.g. for monitoring and/or controlling a charging operation and/or charging cycle performed by the EVSE 100.

As shown in Fig. 2, the SECC 222 may be powered by a power supply unit 220. The power supply unit 220 provides galvanic isolation between the power supply infrastructure 104 and the SECC. In particular, an output side of the power supply unit 220 may be galvanically isolated from PE. Beneficially, galvanic isolation of the SECC may prevent a leakage current flowing through the signal terminals CP, CAN-Hi, CAN-Lo suitable for causing galvanic corrosion of the floating vessel 110. According to embodiments, the SECC 222 may be galvanically isolated from the converter 210, e.g. as a result of the double insulation of the converter 210, which may beneficially provide safety of the EVSE 100. In some embodiments, the SECC 222 and/or the EVCC 224 may be connected to SPE (not shown), e.g. so that the SPE can form and/or function as a common ground between the SECC 222 and the EVCC 224.

The SECC 222 may be configured for controlling the EVSE 100, particularly the converter 210, e.g. to provide a charging power having a suitable voltage and/or current for efficiently and safely charging the energy storage system 212 of the floating vessel. The SECC 222 may be configured for controlling the switches S_{S}1, S_{S}2. Likewise, the EVCC 224 may be configured for controlling the switches S_{V}1, S_{V}2. The switches S_{S}1, S_{S}2, and/or S_{V}1, S_{V}2 may be controlled so that the vehicle connector 240 and/or the receptacle 250 is/are only energized when a safe and/or stable connection between the EVSE 100 and the floating vessel 110 has been established.

According to some embodiment, the EVCC 222 may be connected, e.g. via a sensor and/or a data line, to the VLD 300. In particular, the EVCC 222 may be configured for determining a state of the VLD 300, such as whether the VLD 300 is in an open state, in a closed state, in an unexpected and/or failed state. In some embodiments, the EVCC 222 may be configured to control the EVSE 100, such as a charging operation of the EVSE 100, according to a determined state of the VLD 300. For example, in case the EVCC 222 detects that the VLD 300 has entered a closed state, an unexpected state and/or a failed state, the EVCC 222 may trigger a service flag, interrupt charging, generate an alarm, and/or improve logging.

Referring now to Fig. 3, further aspects of the VLD 300 are explained with reference to embodiments. Fig. 3 shows a schematic circuit diagram of a voltage limiting device according to embodiments, which may be suitable as a VLD 300 in the embodiments shown in Fig. 1 and/or Fig. 2.

The VLD 300 has a first terminal connectable to PE and a second terminal connectable to SPE. A varistor circuit including the varistor 310 is connected in parallel to the first terminal and the second terminal. Varistors are known in the art. The varistor 310 may be a metal-oxide varistor, such as a ZnO varistor. The varistor 310 may be essentially non-conductive when a potential between the first terminal and the second terminal and/or across the varistor 310 is below a threshold voltage of the varistor 310, such as a clamping voltage and/or limiting voltage Uₛ. While non-conductive and/or below the threshold voltage, the resistance of the varistor 310 and/or the VLD 300 may be at or above 1kΩ, at or above 100kΩ, or even at or above 10MΩ. When a voltage above the threshold voltage is applied to the VLD 300, the varistor 310 becomes conductive, i.e. a resistance of the varistor 310 may decrease and/or the varistor 310 may resemble a conductor. Accordingly, the VLD 300 may, through action of the varistor 310, act as a voltage clamp and/or shunt a current created by an overvoltage, such as a fault voltage and/or surge voltage, between PE and SPE.

According to embodiments, the (rated) threshold voltage may be in the range of 30 V to 200 V, such as in the range of 50 V to 150 V, such as about 30 V, about 50 V, about 60 V, about 80 V, about 100 V, or about 120 V.

According to embodiments, the VLD 300 may preferably include further components, such as the trigger electronics 320 and the antiparallel thyristors 330 provided in parallel to the varistor 310. In case of a longer duration overvoltage, the trigger electronics 320 may cause one of the thyristors 330 to become conductive so that the triggered thyristor accommodates the flow of current. This may beneficially reduce prolonged thermal stress on the varistor 310. The triggered thyristor may remain conductive until a holding current of the thyristor is no longer met. Accordingly, in case of a fault event resulting in a (prolonged) potential above the threshold voltage, the thyristor may cause the potential to fall below the threshold voltage of the varistor 310, such as a voltage below 10 V, a voltage below 5 V, or even a voltage of about or below 3 V.

Beneficially, in an EVSE 100 such as shown in Fig. 1 and/or Fig. 2, the VLD 300 may reduce a potential shock hazard due to a voltage difference between PE and SPE for both short-term surges as well as longer-lasting over-voltages. In particular, a human and/or machine coming into contact with both PE and SPE, e.g. due to simultaneously contacting conductive shoreside ground and a metallic portion of the floating vessel 110 connected to SPE is never exposed to a voltage difference of more than the threshold voltage and/or an even lower voltage corresponding to the holding current of the thyristors 330.

Suitable VLDs 300 are commercially available. For example, the VLD 300 may be a Low Voltage Limiter Type HVL 120-0.3 commercially available from ABB Switzerland Ltd at the time of filing this disclosure.

While a VLD 300 has been explained with reference to the preferred embodiment shown in Fig. 3, other and further embodiments may be equally suitable. For example, the VLD 300 may be implemented as a low-voltage surge arrester, an air gap, a gas discharge device, an electronic monitoring and/or switching device, or other types of devices known in the art suitable for limiting, by the voltage limiting device having a first resistance while a potential between the EVSE earth terminal and the PE is below a threshold voltage of the EVSE earth terminal, a current flowing from the EVSE earth terminal and the PE, and, while a potential between the EVSE earth terminal and the PE is above a threshold voltage of the voltage limiting device, having a second resistance lower than the first resistance.

Referring now to Fig. 4, a method 400 of providing power for charging a floating vessel is described.

The method includes providing 410 an electric vehicle supply equipment (EVSE). The EVSE may be an EVSE according to embodiments described herein, such as the EVSE 100 described with reference to Fig. 1 and/or Fig. 2.

The method 400 further includes connecting 420 a +DC EVSE terminal and a -DC EVSE terminal of the EVSE to corresponding shipside +DC and -DC terminals of the floating vessel.

The method 400 further includes connecting 430 a shipside protective earth (SPE) terminal of the floating vessel to a corresponding EVSE earth terminal of the EVSE. Operations 420 and/or 430 may include connecting a vehicle connector of the EVSE, such as the vehicle connector 240 described with reference to Fig. 2, to a corresponding receptacle of the floating vessel, such as the receptacle 250 described with reference to Fig. 2. Accordingly, the operations 420 and 430 may be performed simultaneously, or in close succession, when inserting the vehicle connector into a corresponding receptacle.

According to embodiments, connecting the vehicle connector to the receptacle may be performed manually, machine-assisted, or even automated. For example, a person, such as a dockside worker, may connect a charging cable of the EVSE having the vehicle connector provided at an end of the cable to the floating vessel. For example, the vehicle connector may be connected to the floating vessel by a mechanical arm. Likewise, in some embodiments, the receptacle may be provided at the EVSE 100, and a charging cable having a corresponding connector may be provided from the floating vessel.

The method 400 further includes connecting 440, by the EVSE, the SPE terminal to a shoreside protective earth (PE) via the EVSE earth terminal and a voltage limiting device (VLD).

Beneficially, the method 400 provides grounding to the floating vessel while limiting galvanic corrosion. Beneficially, this advantage is provided as soon as the EVSE is connected to the floating vessel. In particular, the advantage is provided even before or after providing power for charging the floating vessel.

According to embodiments, the method 400 may include providing a DC power to the floating vessel via the +DC EVSE terminal and the -DC EVSE terminal. Beneficially, the EVSE may control the characteristics of the DC power, such as voltage, current and/or power, according to the requirements of the floating vessel. Accordingly, the DC power may be connected essentially directly to an energy storage device of the floating vessel. Accordingly, the floating vessel may be devoid of heavy, large and/or expensive equipment for controlling the charging of the energy storage device, such as transformers, rectifiers, inverters, charging controllers or the like. Beneficially, DC charging may allow higher charging powers and/or shorter charging times than, for example, AC charging in which the charging power is converted on-board the floating vessel. In particular, the systems and methods provided herein may allow DC fast charging, or even DC megawatt charging.

According to embodiments, the method 400 may include limiting, by the voltage limiting device having a first resistance while a potential between the EVSE earth terminal and the PE is below a threshold voltage of the EVSE earth terminal, a current flowing from the EVSE earth terminal and the PE. The VLD may be the VLD 300 described herein with reference to Fig. 1, Fig. 2 and/or Fig. 3. Accordingly, the VLD may have a second resistance lower than the first resistance while a potential between the EVSE earth terminal and the PE is above a threshold voltage of the voltage limiting device. Accordingly, while the potential between the EVSE earth terminal and the PE is above the threshold voltage, the method 400 may include grounding the EVSE earth terminal and/or the SPE terminal to the PE via the VLD.

According to embodiments, when performing the method 400, the +DC EVSE terminal and the -DC EVSE terminal may be galvanically isolated from the EVSE earth terminal, the PE and/or a power supply infrastructure. Accordingly, components of the EVSE, such as a converter configured for generating the DC power, may be electrically floating with respect to the EVSE earth terminal, the PE and/or the power supply infrastructure. For example, the EVSE earth terminal and/or components of the EVSE connected to the EVSE earth terminal may be insulated, particularly double insulated. For example, at least an output side of the converter may be insulated, particularly double insulated.

According to embodiments, the use of an EVSE according to embodiments, such as the EVSE 100 described with reference to Fig. 1 and Fig. 2, is described. The use may include connecting the EVSE to a floating vessel. In particular, the use may include providing power for charging the floating vessel. The use may include performing some or all of the operations described for a method according to embodiments, such as the method 400 described with reference to Fig. 4.

According to embodiments, the use may be a use of the EVSE in a marina, wherein a marina may be understood as an essentially fixed, shoreside and/or shore-adjacent structure, and may be understood as including docks, harbours, ports, terminals or other structures suitable for stationing, e.g. docking, a floating vessel.

According to embodiments, the use may include providing a plurality of EVSEs according to embodiments. The plurality of EVSEs shares a shoreside protective earth PE. For example, the plurality of EVSEs may be connected to a common PE conductor of a power supply infrastructure, and/or be earthed through a common or neighbouring ground connection. The use may include connecting the plurality of EVSEs to a plurality of floating vessels, e.g. connecting a first EVSE to a first floating vessel, connecting a second EVSE to a second floating vessel, and so on. Each EVSE and each floating vessel may be connected to a separate shipside protective earth SPE. In particular, each SPE terminal of each of the plurality of floating vessels may be connected to an SPE terminal of an EVSE. Accordingly, each SPE may be separate. In particular, each SPE may form a separate conductor, potential and/or circuit. In particular, the SPE may be separated by the action of the VLD of each of the pluralities of EVSEs, i.e. be separated by a high-resistance circuit and/or even galvanically isolated.

Beneficially, the use may prevent the formation of a galvanic cell in which a first floating vessel acts as an anode and a second floating vessel acts as a cathode. Accordingly, even in case of a plurality of floating vessels, corrosion protection for each of the plurality of floating vessels is provided. Furthermore, in case of an electric fault or lightning strike, the SPE potential of each of the plurality of floating vessels is maintained below the threshold voltage of the VLD, thus providing safety even in case of a plurality of floating vessels being subjected to the fault condition.

## Claims

1. Electric vehicle supply equipment, EVSE, configured for providing power for charging a floating vessel, comprising:
- a converter having an input side configured to be connected to a power supply infrastructure, and an output side configured for providing a direct current, DC, charging power, the output side comprising a +DC output line and a -DC output line,
- a voltage limiting device comprising a first terminal and a second terminal, the first terminal being configured to be grounded to a shoreside protective earth, PE, connection of the power supply infrastructure;
- a vehicle connector comprising a +DC EVSE terminal connected to the +DC output line, a -DC EVSE terminal connected to the -DC output line, and a EVSE earth terminal, wherein the +DC and -DC EVSE terminals are configured to be connected to corresponding shipside +DC and -DC terminals of the floating vessel, and wherein the EVSE earth terminal is configured to be connected to a shipside protective earth, SPE, terminal of the floating vessel, wherein
the EVSE earth terminal is connected to the second terminal of the voltage limiting device.

2. The EVSE according to claim 1, further comprising an insulation monitoring device connected to the EVSE earth terminal and at least one of the +DC output line and the -DC output line.

3. The EVSE according to claim 1 or 2, wherein the converter is galvanically isolated from the shoreside PE connection.

4. The EVSE according to any one of the preceding claims, wherein the converter provides galvanic isolation between the input side and the output side.

5. The EVSE according to any one of the preceding claims, wherein the voltage limiting device comprises a varistor circuit connected in parallel to the first terminal and the second terminal.

6. The EVSE according to any one of the preceding claims, wherein the output side of the converter is insulated, particularly double insulated.

7. The EVSE according to any one of the preceding claims, wherein the vehicle connector further comprises signal terminals to connect a supply equipment communication controller, SECC, of the EVSE to an electric vehicle communication controller, EVCC, of the floating vessel, and wherein the SECC is galvanically isolated from the power supply infrastructure and the converter.

8. Method of providing power for charging a floating vessel, comprising:
providing an electric vehicle supply equipment, EVSE;
connecting a +DC EVSE terminal and a -DC EVSE terminal of the EVSE to corresponding shipside +DC and -DC terminals of the floating vessel;
connecting a shipside protective earth, SPE, terminal of the floating vessel to a corresponding EVSE earth terminal of the EVSE; and
connecting, by the EVSE, the SPE terminal to a shoreside protective earth, PE, via the EVSE earth terminal and a voltage limiting device.

9. The method according to claim 8, further comprising:
providing a DC power to the floating vessel via the +DC EVSE terminal and the -DC EVSE terminal.

10. The method according to claim 8 or 9, further comprising:
limiting, by the voltage limiting device having a first resistance while a potential between the EVSE earth terminal and the PE is below a threshold voltage of the EVSE earth terminal, a current flowing from the EVSE earth terminal and the PE; wherein, while a potential between the EVSE earth terminal and the PE is above a threshold voltage of the voltage limiting device, the voltage limiting device has a second resistance lower than the first resistance.

11. The method according to claim 10, wherein the threshold voltage is between 30 volts to 120 volts.

12. The method according to any one of claims 8 to 11, wherein the SPE is connected to a water-contacting metal portion of the floating vessel.

13. The method according to any one of claims 8 to 12, wherein, under a no-fault condition, the +DC EVSE terminal and the -DC EVSE terminal are galvanically isolated from the EVSE earth terminal, the PE and/or a power supply infrastructure.

14. Use of the electric vehicle supply equipment, EVSE, according to any one of claims 1 to 7 for providing power for charging a floating vessel.

15. The use according to claim 14 in a marina, comprising providing a plurality of the EVSE according to any one of claims 1 to 7 to provide power to a plurality of floating vessels, wherein the plurality of EVSEs shares the shoreside protective earth, PE, and wherein each shipside protective earth, SPE, terminal of each of the plurality of floating vessels is separate.
